**Europäisches Patentamt**

**European Patent Office**

**Office européen des brevets**

(11) Numéro de publication : **0 392 903 B1**

(12) ## FASCICULE DE BREVET EUROPEEN

(45) Date de publication du fascicule du brevet :
**28.09.94 Bulletin 94/39**

(51) Int. Cl.[5] : **G21F 9/02**

(21) Numéro de dépôt : **90400944.6**

(22) Date de dépôt : **06.04.90**

(54) **Cartouche filtrante, obtenue par voie humide, pour la filtration de gaz, notamment chauds et/ou radioactifs et/ou corrosifs.**

(30) Priorité : **10.04.89 FR 8904690**

(43) Date de publication de la demande :
**17.10.90 Bulletin 90/42**

(45) Mention de la délivrance du brevet :
**28.09.94 Bulletin 94/39**

(84) Etats contractants désignés :
**BE CH DE ES FR GB IT LI**

(56) Documents cités :
**FR-A- 2 556 608**
**US-A- 4 286 977**
**US-A- 4 500 328**

(73) Titulaire : **SOCIETE GENERALE POUR LES TECHNIQUES NOUVELLES S.G.N.**
**1, Rue des Hérons**
**Montigny-le-Bretonneux**
**F-78182 Saint-Quentin-en-Yvelines Cédex (FR)**
(84) **BE CH DE ES FR GB IT LI**
Titulaire : **COMMISSARIAT A L'ENERGIE ATOMIQUE Etablissement de Caractère Scientifique Technique et Industriel**
**B.P. 510**
**F-75752 Paris Cedex 15 (FR)**
(84) **BE CH DE ES FR GB LI**

(72) Inventeur : **Carpentier, Serge**
**3, Allée des Tamaris**
**F-94440 Villecresnes (FR)**
Inventeur : **De Tassigny, Christian**
**96, Rivoire de la Dame**
**F-38360 Sassenage (FR)**

(74) Mandataire : **Le Roux, Martine et al**
**Cabinet Beau de Loménie**
**158, rue de l'Université**
**F-75340 Paris Cédex 07 (FR)**

## Description

L'invention concerne une cartouche filtrante pour la filtration de gaz notamment chauds et/ou radioactifs et/ou corrosifs. De telles cartouches sont notamment utiles dans les installations d'incinération de déchets nucléaires qui produisent des gaz chauds radioactifs (la température de combustion pouvant atteindre 1200°C, les gaz sont en général à 600 - 1 000°C). Les gaz sont chargés en particules solides radioactives (plutonium par exemple), en noir de carbone et en vapeurs corrosives (Cl$_2$, HCl, ...), ce, en plus ou moins grande quantité selon la nature des déchets brûlés.

Pour épurer ces gaz avant leur rejet dans l'atmosphère, on dispose de deux barrières de filtres en série ; la première est constituée par des bougies filtrantes qui doivent arrêter 99 % au moins des particules de diamètre de l'ordre de 1 μm, et la seconde est un filtre de très haute efficacité (T.H.E.) qui arrête plus de 99 % des particules de diamètre supérieur à 0,3 μm. Le doublement des barrières permet d'augmenter la durée de vie du filtre (T.H.E.) qui est un dispositif très onéreux. Les cartouches de l'invention conviennent parfaitement pour la première de ces barrières.

Une telle barrière de filtration avec des bougies filtrantes est décrite dans le brevet français 1 503 631, elle est schématisée sur les figures 1 et 2.

Les bougies filtrantes 1 sont constituées d'un cylindre support 2 et d'une cartouche filtrante 3.

Le cylindre support 2 est poreux de façon à laisser passer les gaz au travers de ses parois, il est constitué par exemple par une toile métallique enroulée dont les extrémités sont soudées. L'une des extrémités 4 du cylindre est fermée, l'autre extrémité 5 ouverte comporte des moyens pour la liaison de la bougie à une platine 6. Ces moyens sont par exemple un manchon 7 fixé au cylindre et à la platine ; dans ce cas, la platine avec toutes ses bougies est ôtée pour le remplacement desdites bougies.

La cartouche filtrante 3 est constituée d'un feutre de fibres d'amiante défibrée en mélange avec de l'amiante préalablement calciné. Ces fibres assurent la filtration. Pour limiter leur retrait à la chaleur, elles peuvent être mélangées à des fibres de silice vitreuse, de microquartz, de mullite, kaolin,.. Les fibres de la cartouche filtrante 3 sont déposées sur le support 2 par entraînement gazeux.

Dans le brevet français 2 556 608, on procède au remplacement individuel d'une bougie, les moyens pour sa liaison avec la platine étant constitués par une collerette fixée sur l'extrémité 5 et venant simplement en appui sur la platine.

Les bougies avec fibres d'amiante donnent toute satisfaction au point de vue filtration et coût. Mais actuellement, les autorités administratives limitent, voire interdisent dans certains pays l'emploi d'amiante.

Il fallait donc trouver un matériau de substitution :
- efficace contre les poussières (99% pour des poussières de 1 μm environ) pour des épaisseurs raisonnables ;
- à vitesse de colmatage lente ;
- résistant aux chocs thermiques et à l'agressivité chimique ;
- à prix modéré.

Par ailleurs, on s'est volontairement écarté des bougies céramiques trop onéreuses et dont les vitesses de colmatage sont encore trop rapides.

Le brevet US 4 500 328 décrit un matériau composite à base de fibres céramiques réfractaires préparé par voie humide et utilisé pour la filtration de gaz chauds, d'incinérateurs notamment.

Selon ce brevet, ledit matériau peut être obtenu de deux façons différentes.

Dans un premier procédé de préparation, une solution aqueuse très diluée (total solides/eau < 1 % en poids) de fibres réfractaires (de diamètre < 12 μm, telles que des fibres de zircone, alumine, silice ...) et de liant organique (résine phénolique, amidon ... à raison de 25 à 100 % en poids des fibres) est déposée sur un moule perforé mis sous vide. L'ensemble est étuvé, séché puis démoulé.

La structure obtenue est portée à une température de 1 350°C plusieurs heures et en atmosphère inerte, pour pyrolyser le liant organique.

Le matériau composite obtenu est composé de fibres réfractaires reliées entre elles par du carbone qui provient de la décomposition sous atmosphère inerte du liant. En présente d'oxygène, le carbone se serait transformé en CO$_2$ gazeux, d'où la nécessité de l'atmosphère inerte.

Dans un second procédé de préparation, une solution aqueuse très diluée des fibres réfractaires seules est déposée sur un moule perforé mis sous vide. Après cette opération, une solution de nitrate de zirconium ou d'yttrium est passée. L'ensemble est séché puis est soumis à un frittage conventionnel.

Le matériau composite obtenu est composé de fibres réfractaires reliées entre elles lors du frittage par ramollissement des fibres. Les températures de frittage sont élevées : 1 700°C pour la silice et supérieures à 1 700°C pour les autres matières (zircone, alumine ..).

Les nitrates de zirconium ou d'yttrium ajoutés sont des stabilisants : ils évitent la formation d'eutectiques qui abaisseraient la température de fusion du matériau et par conséquent nuirait à un bon frittage. C'est une utilisation classique de stabilisants.

Les filtres obtenus selon le brevet US 4 500 328 sont constitués par le matériau filtrant sous forme de cylindre plein de petite dimension (diamètre 19 mm, hauteur 13 mm qui constitue également l'épaisseur filtrante) placé dans un support métallique sensiblement de même dimension et muni de trous pour le passage des gaz.

Selon l'invention, on se propose de préparer des bougies filtrantes, aptes à être utilisées dans les barrières de filtration précédemment décrites, c'est-à-dire des bougies creuses, d'une relative longueur. A titre indicatif, on précise que lesdites bougies peuvent avoir, notamment pour être utilisées dans un dispositif d'incinération de matériaux nucléaires les dimensions ci-après :
- diamètre de 25 mm
- hauteur de 850 mm
- épaisseur filtrante d'environ 5 à 10 mm.

Il n'est pas du tout évident que les procédés décrits dans le brevet US 4 500 328 permettent la préparation de bougies efficaces présentant une telle géométrie.

Par ailleurs, le premier procédé dudit brevet US 4 500 328 conduit à un matériau chargé en carbone, qui, porté dans une installation d'incinération délivrant des gaz suffisamment chauds et oxydants, se dégraderait inévitablement en dégageant du $CO_2$ et en perdant alors sa cohésion. De plus, le second procédé dudit brevet US 4 500 328 nécessite un frittage, c'est-à-dire un traitement thermique long à température élevée.

Les inventeurs ont cherché un produit présentant les qualités requises (résistance mécanique, résistance à la corrosion, aptitude à la filtration selon les caractéristiques exigées) qui soit préparé de façon plus simple.

Selon l'invention, on obtient une cartouche filtrante utile notamment pour la filtration de gaz chauds et/ou radioactifs et/ou corrosifs, composée d'un corps sensiblement cylindrique, creux, fermé à l'une de ses extrémités et ouvert sur l'autre extrémité, contenant au moins 50 % en poids d'alumine et/ou de zircone et éventuellement muni de moyens pour son supportage par une platine ; ledit corps étant obtenu par moulage sous vide d'une babotine comprenant des fibres d'alumine et/ou de zircone dont le diamètre est inférieur à 20 μm et la longueur inférieure à 25 mm, de la silice colloïdale, au moins un liant organique et au moins un agent défloculant, puis séchage et traitement thermique à une température suffisante pour volatiliser le(s) liant(s) organique(s) et l'(les) agent(s) défloculant(s).

Dans le procédé, dit par voie humide, on élabore dans un premier temps une barbotine, c'est-à-dire un mélange en milieu aqueux des constituants.

Les fibres ont été sélectionnées selon leurs dimensions, et leur nature pour former un feutre filtrant. Le feutre est un enchevêtrement de fibres avec des chemins de passage des gaz distribués de façon aléatoire et dont la section n'est pas régulière.

Les fibres ont une longueur inférieure à 25 mm (10 - 15 mm préférés) et un diamètre inférieur à 20 μm (1 - 10 μm préférés, une valeur moyenne de 3 μm étant avantageuse).

Les fibres sont nécessairement constituées en majorité de zircone et/ou d'alumine ; d'autres fibres peuvent être présentes (fibres chargées en silice telles que fibres de verre, fibres de silice) pourvu qu'elles soient compatibles avec les autres constituants et avec l'application (pas de fibres fusibles pour le traitement de gaz à des températures supérieures au point de fusion de ces fibres).

De toute façon, la cartouche obtenue après traitement thermique doit être constituée d'au moins 50 % en poids d'alumine et/ou de zircone.

De préférence, elle contient au moins 85 % en poids d'alumine et/ou de zircone. On a, avec les fibres d'alumine, un produit alumineux (plutôt qu'un aluminosilicate), plus réfractaire et plus résistant aux acides (tels que les produits chlorés).

D'une façon générale, les fibres représentent environ 1 % en poids de la barbotine, mais leur quantité est plus précisément déterminée par l'homme du métier pour obtenir la cartouche de composition voulue.

De la silice colloïdale (commercialisée par exemple sous la marque LUDOX) est présente, selon l'invention, dans la barbotine. De préférence, la barbotine contient 3 à 12 % (en poids) en silice colloïdale.

La silice colloïdale a plusieurs fonctions.

Elle est d'abord un liant à froid qui permet d'augmenter la viscosité de la barbotine mais surtout elle permet d'obtenir une rigidité mécanique suffisante de la pièce moulée pour autoriser un démoulage avant même le séchage.

On peut également raisonnablement penser que la silice colloïdale, lorsqu'elle est en présence de sodium, avantageusement ajouté à la barbotine, constitue un liant à chaud pour le matériau, à cause de la formation d'un eutectique $Na_2O - 2SiO_2 - Al_2O_3$ fondant à 732°C.

Par chauffage, il y a alors collage des fibres réfractaires sur le mélange eutectique.

Il ne faut pas que ce collage nuise au pouvoir filtrant du feutre, aussi la quantité de sodium éventuellement

3

présente doit être faible ( < 1 % en poids de la barbotine).

De préférence, on utilise une silice colloidale stabilisée au sodium (Na < 0,1 %).

Par ailleurs, lorsque la température dépasse 732°C, l'eutectique fondu s'enrichit en alumine et/ou zircone (provenant des fibres) et s'appauvrit en silice. La réfractérité du collage augmente. Le maintien du pouvoir filtrant est alors obtenu aux températures supérieures (750°C et plus).

La barbotine contient également un ou des liant(s) organique(s) employé(s) classiquement dans les procédés de moulage pour assurer une cohésion à froid. Il s'agit par exemple d'amidon, d'alcool polyvinylique ou de leurs mélanges. Le(s) liant(s) organique(s) représente(nt) en général 5 à 10 % en poids de la barbotine.

Un défloculant est un matériau organique qui a la propriété de mettre en suspension les matières solides dans les barbotines évitant ainsi la sédimentation des fibres. On utilise en général des alginates tel l'agar-agar.

La barbotine ainsi obtenue est moulée.

Le moulage s'effectue de préférence de la façon suivante : la barbotine se dépose autour d'un moule perforé dans lequel le vide est fait, le moule étant plongé dans un bac de barbotine. On moule en surépaisseur, c'est-à-dire qu'on dépose une couche de barbotine supérieure à la couche nécessaire. Cette surépaisseur permet ultérieurement l'usinage aux dimensions voulues pour la cartouche.

D'autres modes de moulage peuvent également être utilisés.

Le moule utilisé est évidemment un corps sensiblement cylindrique pour former une cartouche sensiblement cylindrique. La fermeture d'une extrémité de la cartouche peut être réalisée après moulage par assemblage d'une pièce rapportée.

Après moulage, la cartouche est séchée. Eventuellement, elle est démoulée avant ou après son séchage.

De façon remarquable dans cette invention, la cartouche obtenue après moulage est démoulable mais surtout usinable, du fait de sa rigidité mécanique. L'usinage est alors fait aux dimensions définitives, le matériau ne présentant pas de retrait significatif à la chaleur.

Le séchage est conduit de façon classique dans un four pour éliminer l'eau.

Il est suivi d'un traitement thermique à une température suffisante pour assurer la décomposition et la volatilisation du (des) liant(s) organique(s) et du(des) défloculant(s). Il ne reste donc aucune trace de ces substances dans la cartouche filtrante obtenue après ledit traitement.

De façon avantageuse, ce traitement est mené dans l'installation de filtration : la cartouche moulée séchée est mise en place sur la platine. Le passage des gaz suffisamment chauds assure le traitement thermique.

On peut en plus procéder à une cuisson du matériau, mais sans que cette opération soit obligatoire.

Le pouvoir filtrant de la cartouche ainsi obtenue est dû au feutre de fibres qui piège les particules transportées par les gaz, et notamment le carbone.

Le carbone bloqué dans le feutre, situé en atmosphère oxydante à 900 - 1000°C (filtration de gaz d'incinération) est alors porté à une température supérieure à sa température de début de combustion. Il se transforme alors en $CO_2$ gazeux.

Le feutre permet donc la combustion des particules combustibles (dans les conditions de l'application) piégées.

Le feutre assure également en grande partie la tenue mécanique de la cartouche, les points de collage par l'eutectique garantissant une meilleure cohésion.

La mise en place de la cartouche obtenue par voie humide, moulée et séchée selon l'invention est effectuée de la façon suivante :

- soit la cartouche est placée dans un support généralement cylindrique, celui-ci disposant au niveau de son extrémité ouverte d'un moyen pour son supportage par la platine. Il dispose également au niveau de cette extrémité d'un moyen pour fermer l'espace libre entre le cylindre et la cartouche, de façon à ce que les gaz à filtrer soient dirigés en entrant dans l'espace creux de la cartouche.

Le cylindre support est avantageusement constitué d'une toile métallique soudée (tel que décrit dans l'art antérieur) ou d'une "chaussette" : c'est un tube tissé fermé à une extrémité, le tissage étant de préférence exécuté avec un fil d'aluminosilicate et avec le maillage le plus fin possible.

- soit la cartouche est utilisée telle que, on lui adjoint alors sur son extrémité ouverte un moyen pour son supportage par la platine, ce moyen étant évidemment conçu et disposé de façon à ce que les gaz à filtrer soient dirigés uniquement dans l'espace creux de la cartouche. Ce peut être un manchon enfoncé dans l'espace creux de la cartouche et avec une collerette venant en appui sur la platine, le diamètre de l'évidement de la platine étant légèrement supérieur au diamètre externe de la cartouche, de façon à la changer facilement.

On peut également de façon avantageuse prévoir au moulage un épaulement au niveau de l'extrémité ouverte de la cartouche, qui viendra en appui sur la platine.

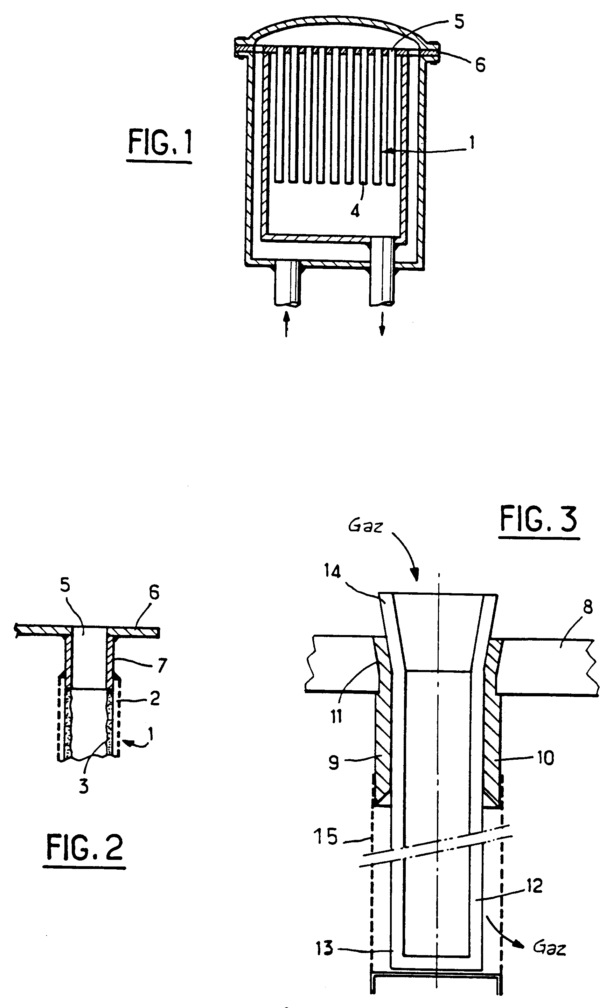

La figure 3 montre un exemple de mise en place de la cartouche. Dans un évidement évasé de la platine 8, un manchon 9 a été placé qui comprend une partie cylindrique 10 débouchant hors de la platine et une partie évasée 11 dont la surface coopère exactement avec celle de l'évidement.

Ce manchon reste constamment en place. Une cartouche 12 est introduite dans le manchon, les diamètres internes de la partie 10 du manchon et externe du corps cylindrique de la cartouche sont sensiblement égaux, juste pour permettre le glissement de la cartouche. Celle-ci est fermée à son extrémité 13, son autre extrémité ouverte comporte une partie évasée 14 dont la surface externe coopère exactement avec la surface interne de la partie 11 du manchon.

On observe qu'on peut très bien rajouter sur ce schéma un cylindre support 15 troué, sans que cette disposition soit obligatoire.

Le choix du montage de la cartouche dépend principalement de son application et de sa rigidité. La cartouche préparée peut posséder une résistance mécanique suffisante pour être montée sans cylindre support.

Lorsque la cartouche est usée, on peut :
- ôter la bougie (cartouche + cylindre support) et procéder au remplacement hors de l'installation ;
- ôter la cartouche seule, le cylindre support reste en place, une autre cartouche neuve étant mise en place in situ ;
- ôter la cartouche avec son moyen de supportage dans le cas où il n'y a pas de cylindre support, et une nouvelle cartouche munie d'un moyen de supportage est ramenée ;
- casser la cartouche usée et la faire tomber dans le fond de l'enceinte de la barrière de filtration, le moyen de supportage restant en place sur la platine, la cartouche neuve est réintroduite in situ sur le moyen de supportage (réalisation de la figure 3 mais sans cylindre support 15).

Les cartouches usées lorsqu'elles sont chargées en radioéléments sont traitées comme des déchets nucléaires.

Les exemples ci-après montreront que de telles cartouches présentent une efficacité de filtration équivalente aux cartouches à fibres d'amiante préparées par voie sèche.

On préfère élaborer et utiliser des cartouches préparées par voie humide car :
- la préparation par moulage est plus facile à mettre en oeuvre ;
- on peut s'affranchir du cylindre support qui est coûteux et qui se corrode rapidement lorsqu'il est en métal ;
- le remplacement des cartouches usées est simplifié : il suffit de retirer ou casser la cartouche usée et d'en remettre une autre fabriquée à l'extérieur de l'installation.

## EXEMPLE 1

Une cartouche a été obtenue à partir de fibres d'alumine broyées pour avoir 3 $\mu$m de diamètre moyen et 10-15 mm de longueur moyenne chargées en silice, de 4 % en poids de barbotine de silice colloïdale, d'amidon (9 % du mélange aqueux) et de quelques % de défloculant, le tout étant mélangé en milieu aqueux pour obtenir une barbotine.

La barbotine est moulée, usinée et séchée.

Il reste après 4 à 5 heures de cuisson à 700°C :

93,5 % $Al_2O_3$, 5,5 % $SiO_2$, $\leqq$ 1 % autres.

Cette cartouche est placée dans le cylindre support qui a sensiblement son diamètre intérieur égal au diamètre extérieur de la cartouche, on enfonce dans le cylindre un manchon possédant une collerette et on dispose la bougie obtenue dans un évidement de la platine.

## EXEMPLE 2

Une cartouche est préparée à partir d'une barbotine de fibres d'alumine (1 % en poids de barbotine de fibres), de silice colloïdale (8 %), d'amidon (8 %) et de défloculant (1 %).

On moule en surépaisseur (8 mm) avec une partie évasée en extrémité. On sèche.

On usine à 5 mm.

La cartouche obtenue est mise en place dans un manchon inséré dans l'évidement de la platine.

Les résultats de filtration et colmatage sont donnés ci-après :

## 1. Filtration

Des essais ont été menés sur une installation d'incinération équipée d'un brûleur à gaz naturel délivrant 100 à 120 Nm³/h de gaz à haute température variant de 600 à 1 000°C et d'une barrière de filtration pouvant recevoir 7 bougies filtrantes. Deux lignes de dilution permettent de contrôler la température du brûleur et d'ajuster le débit et la température au niveau de la barrière. Différents piquages ont été installés par l'injection et le prélèvement d'aérosols.

La distribution granulométrique de l'aérosol test qui est une dispersion de dioctylphtalate montre un diamètre moyen médian des gouttelettes générées se situant autour de 0,6 µm avec un écart type de 1,7.

L'aérosol a été produit par un générateur pneumatique à 6 buses de pulvérisation alimenté en air comprimé à 2 bars de pression.

Il règne dans l'enceinte une dépression de - 30 à - 50 mm de colonne d'eau.

L'efficacité de la bougie filtrante est déterminée par :

$$E\ (\%) \ = \ 100 \ x \ (1 \ - \ \frac{C1}{Co})$$

avec

Co = concentration en amont des bougies (avant filtration)

C1 = concentration en aval des bougies (après filtration).

## 2. Colmatage

Sur la même installation, on a réglé le débit d'air à 58 m³/h réels, ce qui correspond à une vitesse de passage de 2,4 cm/s au niveau de la traversée de la cartouche.

De la poussière d'alumine a été introduite à intervalles réguliers, au total 1 500 g ont été dispersés à raison de 40-60 g/h, ce qui représente une cadence d'empoussiérage de 25 à 35 fois plus rapide que dans la réalité.

## 3. Les résultats

| Cartouche | Perte de charge (colonne d'eau) | Efficacité de filtration |
|---|---|---|
| obtenue par voie humide (exemples 1 et 2) | 17 mm | 99,1 % |
| avec fibres d'amiante (art antérieur) | 22 mm | 99,0 % |

L'invention a été illustrée sur des gaz d'incinérateur, mais il est clair qu'elle est applicable à tout type de gaz chargé en particules solides.

Elle s'applique notamment :

- aux gaz chauds (T > 700-750°C)
- aux gaz chauds oxydants chargés en carbone
- aux gaz contenant des particules radioactives
- au piégeage d'oxyde d'arsenic $As_2O_3$ issu de la combustion d'arsine $AsH_3$, à 700°C.
- au piégeage du chlorure de zinc ($ZnCl_2$) à 900°C.

## Revendications

1. Procédé de fabrication, à partir d'une barbotine renfermant des fibres fines d'alumine et/ou de zircone et un liant organique, d'une cartouche filtrante pour la filtration de gaz, et en particulier de gaz chauds et/ou radioactifs et/ou corrosifs caractérisé en ce qu'il comprend l'élaboration d'un corps sensiblement cylindrique, creux, fermé à l'une de ses extrémités et ouvert sur l'autre extrémité, contenant au moins 50% en poids d'alumine et/ou de zircone, éventuellement muni de moyens pour son supportage par une platine; ledit corps étant obtenu par moulage sous vide d'une barbotine comprenant des fibres d'alumine et/ou de zircone dont le diamètre est inférieur à 20 μm et la longueur inférieure à 25 mm, de la silice colloïdale, au moins un liant organique et au moins un agent défloculant, puis séchage et traitement thermique à une température suffisante pour volatiliser le(s)dit(s) liant(s) organique(s) et ledit (lesdits) agent(s) défloculant(s).

2. Procédé selon la revendication 1, caractérisé en ce que les fibres d'alumine et/ou de zircone ont un diamètre inférieur à 10 μm et une longueur comprise entre 10 et 15 mm.

3. Procédé selon l'une des revendications 1 ou 2, caractérisé en ce que les fibres représentent environ 1 % en poids de la barbotine.

4. Procédé selon l'une quelconque des revendications précédentes, caractérisé en ce que la silice colloïdale représente 3 à 12 % en poids de la barbotine.

5. Procédé selon l'une quelconque des revendications précédentes, caractérisé en ce que la barbotine contient du sodium.

6. Procédé selon la revendication 5, caractérisé en ce que le sodium représente au plus 1 % en poids de ladite barbotine.

7. Procédé selon l'une quelconque des revendications précédentes, caractérisé en ce que la barbotine contient 5 à 10 % en poids de liant organique.

8. Procédé selon l'une quelconque des revendications précédentes, caractérisé en ce que la barbotine contient également des fibres chargées en silice.

9. Cartouche filtrante pour la filtration de gaz, en particulier de gaz chauds et/ou radioactifs et/ou corrosifs susceptible d'être obtenue par le procédé selon l'une quelconque des revendications précédentes.

10. Cartouche filtrante selon la revendication 9 caractérisée en ce qu'elle contient au moins 85 % en poids d'alumine et/ou de zircone.

## Patentansprüche

1. Verfahren zur Herstellung einer Gasfilterkartusche auf der Grundlage eines feine Tonerde- und/oder Zirkonerdefasern und ein organisches Bindemittel enthaltenden Schlikkers zur Filterung insbesondere heißer und/oder radioaktiver und/oder korrosiver Gase, dadurch gekennzeichnet, daß es die Herstellung eines im wesentlichen zylindrischen Hohlkörpers umfaßt, der an einem Ende geschlossen und am anderen Ende offen ist und der mindestens 50 Gew.-% Tonerde und/oder Zirkonerde enthält und eventuell mit Vorrichtungen zur Befestigung an einer Platte ausgestattet ist; wobei dieser Körper durch Formguß unter Vakuum eines Schlickers erhalten wird, der Tonerde- und/oder Zirkonerdefasern eines Durchmessers unter 20 μm und einer Länge unter 25 mm, kolloide Kieselerde, mindestens ein organisches Bindemittel und mindestens ein Entflockungsmittel enthält, anschließend getrocknet und thermisch behandelt wird, und zwar bei einer für die Verflüchtigung des/der besagten organischen Bindemittel/s und des/der besagten Entflockungsmittel/s ausreichenden Temperatur.

2. Verfahren nach Anspruch 1, dadurch gekennzeichnet, daß die Tonerde- und/oder Zirkonerdefasern einen Durchmesser unter 10 μm und eine Länge zwischen 10 und 15 mm haben.

3. Verfahren nach einem der Ansprüche 1 oder 2, dadurch gekennzeichnet, daß die Fasern etwa 1 Gew.-% des Schlickers ausmachen.

4. Verfahren nach einem der vorstehenden Ansprüche, dadurch gekennzeichnet, daß die kolloidale Kieselerde 3 bis 12 Gew.-% des Schlickers ausmacht.

5. Verfahren nach einem der vorstehenden Ansprüche, dadurch gekennzeichnet, daß der Schlicker Natrium enthält.

6. Verfahren nach Anspruch 5, dadurch gekennzeichnet, daß das Natrium höchstens 1 Gew.-% dieses Schlickers ausmacht.

7. Verfahren nach einem der vorstehenden Ansprüche, dadurch gekennzeichnet, daß der Schlicker 5 bis 10 Gew.-% organisches Bindemittel enthält.

8. Verfahren nach einem der vorstehenden Ansprüche, dadurch gekennzeichnet, daß der Schlicker auch kieselerdehaltige Fasern enthält.

9. Gasfilterkartusche zur Filterung insbesondere heißer und/oder radioaktiver und/oder korrosiver Gase, die durch das Verfahren nach einem der vorstehenden Ansprüche hergestellt werden kann.

10. Gasfilterkartusche nach Anspruch 9, dadurch gekennzeichnet, daß sie mindestens 85 Gew.-% Tonerde- und/oder Zirkonerdefasern enthält.

## Claims

1. Process for manufacturing, from a slip containing fine fibers of alumina and/or zircon and an organic binding agent, a filtering cartridge for the filtration of gases, and in particular of hot and/or radioactive and/or corrosive gases, characterized in that it comprises the preparation of a substantially cylindrical, hollow body, closed at one of its ends and open on the other end, containing at least 50% by weight of alumina and/or zircon and possibly being provided with means for supporting it on a plate; said body being obtained by moulding under vacuum of a slip comprising fibers of alumina and/or zircon whose diameter is less than 20 μm and length less than 25 mm, colloidal silica, at least one organic binding agent and at least one deflocculant, then drying and heat treatment at a sufficient temperature to volatize said organic binding agent(s) and said deflocculant(s).

2. Process according to claim 1, characterized in that the fibers of alumina and/or zircon have a diameter less than 10 μm and a length of between 10 and 15 mm.

3. Process according to one of claims 1 or 2, characterized in that the fibers represent about 1% by weight of the slip.

4. Process according to any one of the preceding claims, characterized in that the colloidal silica represents 3 to 12% by weight of the slip.

5. Process according to any one of the preceding claims, characterized in that the slip contains sodium.

6. Process according to claim 5, characterized in that the sodium represents at the most 1% by weight of said slip.

7. Process according to any one of the preceding claims, characterized in that the slip contains 5 to 10% by weight of organic binding agent.

8. Process according to any one of the preceding claims, characterized in that the slip also contains fibers laden with silica.

9. Filtering cartridge for the filtration of gases, and in particular of hot and/or radioactive and/or corrosive gases which may be obtained by the process according to any one of the preceding claims.

10. Filtering cartridge according to claim 9, characterized in that it contains at least 85% by weight of alumina and/or of zircon.

FIG.1

5

6

1

4

FIG.3

Gaz

14

8

11

9

10

15

12

13

Gaz

FIG.2

5

6

7

2

1

3